# EUROPÄISCHE PATENTSCHRIFT

(11) **EP 2 511 685 B1**
(45) Veröffentlichungstag und Bekanntmachung des Hinweises auf die Patenterteilung: **12.07.2017**
(21) Anmeldenummer: 11003117.6
(22) Anmeldetag: 13.04.2011
(51) Int. Cl.: G01L 19/14, H02K 5/136

(54) **Messzelle mit einem Gehäuse zur Aufnahme eines Sensors, insbesondere eines Druckmessumformers**
Measuring cell with a housing for holding a sensor, in particular a pressure transducer
Cellule de mesure dotée d'un boîtier pour la réception d'un capteur, notamment un transformateur de mesure de pression

(43) Veröffentlichungstag der Anmeldung: 17.10.2012
(73) Patentinhaber: VEGA Grieshaber KG, 77709 Wolfach (DE)
(72) Erfinder: Kopp, Thomas, 77709 Wolfach (DE)
(74) Vertreter: Westphal, Mussgnug & Partner Patentanwälte mbB

(56) Entgegenhaltungen:
- EP-A2- 0 209 495
- EP-A2- 1 471 335
- DE-A1-102007 001 445
- DE-C1- 4 407 212
- US-B1- 6 715 360

## Beschreibung

Messzelle mit einem Gehäuse zur Aufnahme eines Sensors, insbesondere eines Druckmessumformers.

Die Erfindung betrifft eine Messzelle mit einem Gehäuse zur Aufnahme eines Sensors, insbesondere eines Druckmessumformers, bei der das Gehäuse eine Druckausgleichsöffnung für den Sensor aufweist gemäß Oberbegriff des Patentanspruchs 1.

Eine solche Messzelle ist bspw. aus der DE 10 2007 001 445 A1 bekannt. Ein weiterer Drucksensor zur Anwendung in explosionsgefährdeten Umgebungen ist in der Anmeldung US 6 715 360 beschrieben. In der Messtechnik ist es oftmals erforderlich, Messgeräte in explosionsgefährdeten Umgebungen zu betreiben. Damit von solchen Messgeräten keine Explosionsgefahr ausgeht, werden diese in explosionssicheren (ex-sicheren) Gehäusen, die in der Zündschutzart druckfeste Kapselung ausgeführt sind, untergebracht. Ein solches Gehäuse muss bei einer Explosion im Inneren deren Druck aushalten und eine Übertragung der Explosion auf die das Gehäuse umgebende explosionsfähige Atmosphäre verhindern. Damit bei einer Explosion der im Inneren eines druckfest gekapselten Gehäuses entstehende hohe Gasdruck abgebaut werden kann, sind diese Gehäuse in der Regel mit zünddurchschlagsicheren Spalten versehen. Solche Spalten, die natürlicher Weise in einem Gehäuse vorhanden sind, da bspw. auch Kabeldurchführungen für Messsignalleitungen nach außen geführt werden müssen, müssen so eng und so lang bemessen sein, dass eine Flamme der Explosion gelöscht wird und die Temperatur der Explosionsgase soweit durch Abkühlung reduziert wird, dass dadurch die umgebende Atmosphäre nicht gezündet wird. Die Spaltgröße wird in Abhängigkeit der Gaszusammensetzung der explosionsgefährdeten Atmosphäre entsprechend der europäischen Norm EN 50 018 vorgegeben.

So ist es bekannt, zur Zonentrennung von explosionsgefährdeten Bereichen für ein Gehäuse eine Kontaktdurchführung für Messsignalleitungen eines in dem Gehäuse angeordneten Sensors als druckfeste Glasdurchführung mit eingeglasten Metallkontakten vorzusehen, wobei für den Druckausgleich gemäß der anzuwendenden Norm ein Kapillarrohr mit einer Innenbohrung von 0,2 mm und einer Länge von 17 mm verwendet wurde. Nachteilig ist jedoch die aufwändige Konstruktion, die wegen hohen Anforderungen an die Dichtheit und Rissfreiheit der Glasfügung zu hohen Produktionskosten führt.

Ferner ist aus der DE 198 26 911 A1 ein druckfest gekapseltes Gehäuse bekannt, welches zünddurchschlagsicher ausgebildete Spalten mit im Wesentlichen zueinander parallelen Spaltoberflächen aufweist. Diese Spalten sind mit einem zum Innenraum des Gehäuses hin begrenzenden, in den Innenraum ragenden Strömungsteiler ausgebildet, der auf seiner dem Spalt abgewandten Seite gegenüber der betreffenden Gehäusewand hervorsteht, eine Spitze ausbildet und mit einer schräg verlaufenden Seite in die Gehäusewand einmündet. Durch eine solche konstruktive Ausbildung des Spaltes und des Gehäuses soll ebenso eine Explosionsfortpflanzung unterdrückende Wirkung so verbessert werden, dass eine gleiche Sicherheit auch mit größeren Spaltweiten oder geringeren Spaltlängen erzielbar ist.

Der Nachteil dieses aus der DE 198 26 911 A1 gekapselten Gehäuses ist dessen ebenfalls hoher konstruktiver Aufwand, der zu hohen Produktionskosten führt.

Es ist Aufgabe der vorliegenden Erfindung, eine Messzelle der eingangs genannten Art anzugeben, welches eine kompakte Form mit einer normgemäßen Ex-Zonentrennung mit zünddurchschlagsicherem Spalt aufweist und dennoch kostengünstig herstellbar ist.

Diese Aufgabe wird gelöst durch eine Messzelle mit den Merkmalen des Patentanspruchs 1.

Eine solche Messzelle mit einem Gehäuse zur Aufnahme eines Sensors, insbesondere eines Druckmessumformers, bei der das Gehäuse eine Druckausgleichsöffnung für den Sensor aufweist, ist erfindungsgemäß vorgesehen, dass ein Dichtelement mit einer rotationssymmetrischen Mantelfläche in einer hierzu komplementär geformten Innenfläche einer Gehäusebohrung angeordnet ist, und die Druckausgleichsöffnung als wenigstens ein zünddurchschlagsicherer Spalt durch Zusammenwirken eines entlang der Gehäusebohrung verlaufenden, streifenförmigen und ebenen Oberflächenabschnittes auf der Mantelfläche des Dichtelements mit der Innenfläche der Gehäusebohrung gebildet wird.

Ein solches Dichtelement mit wenigstens einer Planfläche auf der Mantelfläche lässt sich leicht, insbesondere wenn dieses Dichtelement aus Kunststoff besteht, herstellen. Die Spaltbreite, also der Abstand zwischen diesem ebenen Oberflächenabschnitt und der Innenfläche der Gehäusebohrung lässt sich einfach einstellen, da der Abstand der Planfläche von der Symmetrieachse des Dichtelements diese Spaltbreite bestimmt. Damit ist eine normgerechte Spaltgröße erzielbar, die kleiner oder gleich 2 mm breit ist.

Vorzugsweise ist gemäß einer Weiterbildung der Erfindung zur Bildung von zwei Spalten auf der Mantelfläche diametral gegenüberliegend jeweils ein ebener Oberflächenabschnitt vorgesehen.

In einer Ausgestaltung der Erfindung ist eine Spannvorrichtung vorgesehen, mit der das Dichtelement in seiner Dichtposition in dem Gehäuse gehalten wird. Mit einer solchen Spannvorrichtung ist das Dichtelement einfach zu montieren, wobei gleichzeitig die erforderliche Dichtheit gewährleistet wird.

Besonders vorteilhaft ist es, wenn das Dichtelement weiterbildungsgemäß kegelstumpfförmig ausgebildet wird, wobei es sich dabei anbietet, auf der Außenseite des Gehäuses das sich konisch verjüngende Stirnende des Dichtelements anzuordnen, so dass das Dichtelement von der Innenseite des Gehäuses eingeführt werden kann. Damit wirkt diese kegelstumpfförmige Form beim Einführen des Dichtelements in die entsprechend geformte Innenfläche zusammen mit der Spannvorrichtung selbstzentrierend, so dass dadurch eine hohe Verbindungsqualität zwischen dem Dichtelement und dem Gehäuse erzielt wird.

Gemäß einer Weiterbildung der Erfindung umfasst die Spannvorrichtung auf der Innenseite des Gehäuses ein Federelement, vorzugsweise eine Wellenscheibe zur Erzeugung einer das Dichtelement in die Gehäusebohrung drückende Anpresskraft sowie ein Fixierelement, vorzugsweise ein Sicherungsring zur Fixierung des Federelementes. Damit sind neben einer einfachen Montage des Dichtelements auch hierzu nur wenige Teile erforderlich.

Gemäß einer anderen Ausgestaltung der Erfindung ist das Dichtelement zylinderförmig ausgebildet, wodurch dessen Herstellung sehr vereinfacht wird. Weiterbildungsgemäß ist zu dessen Montage in der Gehäusebohrung auf der Außenseite des Gehäuses an derselben ein segmentartiger Flansch vorgesehen, an dem das Dichtelement bei dessen Einführen von der Innenseite des Gehäuses aus anliegt.

Auch bei diesem zylinderförmigen Dichtelement umfasst die Spannvorrichtung auf der Innenseite des Gehäuses ein Federelement, vorzugsweise eine Wellenscheibe zur Erzeugung einer das Dichtelement in die Gehäusebohrung drückende Anpresskraft sowie ein Fixierelement, vorzugsweise einen Sicherungsring zur Fixierung des Federelementes.

Besonders vorteilhaft lässt sich gemäß einer Weiterbildung der Erfindung das Dichtelement als mediendichte Kontaktdurchführung zur Durchführung von wenigstens einem Kontaktstift ausbilden, um damit die von dem Sensor erzeugten Messsignale aus dem Gehäuseinnenraum nach außen übertragen zu können. Dabei lassen sich mehrere Kontaktstifte zu einer Steckerleiste zusammenfassen, die so gleichzeitig das Gegenstück von Anschlussleitungen eines Messwertaufnehmers darstellt. Damit werden insgesamt sehr günstige Herstellkosten erzielt, da für die Kontaktleiste handelsübliche Produkte verwendbar sind.

Besonders kostengünstig herstellbar ist das Dichtelement, wenn es weiterbildungsgemäß als Kunststoffkörper, vorzugsweise aus einem thermoplastischen Kunststoff gemäß der Norm IEC 60079-0 Pos. 7.13, insbesondere aus Polyphenylensulfid (PPS), insbesondere mittels eines Spritzgussverfahrens hergestellt wird.

Die Erfindung wird nachstehend anhand von Ausführungsbeispielen unter Bezugnahme auf die beigefügten Figuren ausführlich beschrieben. Es zeigen:
- Figur 1: eine perspektivische Darstellung eines Gehäuses einer Messzelle mit einem kegelstumpfförmigen Dichtelement gemäß der Erfindung als Ausführungsbeispiel,
- Figur 2: eine Schnittdarstellung gemäß Schnitt A-A nach Figur 1 mit einer schematischen Darstellung eines Druckmessumformers,
- Figur 3: eine Schnittdarstellung gemäß Schnitt B-B nach Figur 1 mit einer schematischen Darstellung eines Druckmessumformers,
- Figur 4: eine stirnseitige Draufsicht auf die Messzelle gemäß Figur 1,
- Figur 5: eine Detailansicht gemäß Ausschnitt C nach Figur 4,
- Figur 6: eine perspektivische Darstellung des Dichtelements der Messzelle gemäß Figur 1,
- Figur 7: eine Schnittdarstellung einer Messzelle mit einem zylinderförmigen Dichtelement gemäß der Erfindung als weiteres Ausführungsbeispiel, und
- Figur 8: eine stirnseitige Draufsicht auf die Messzelle gemäß Figur 7.

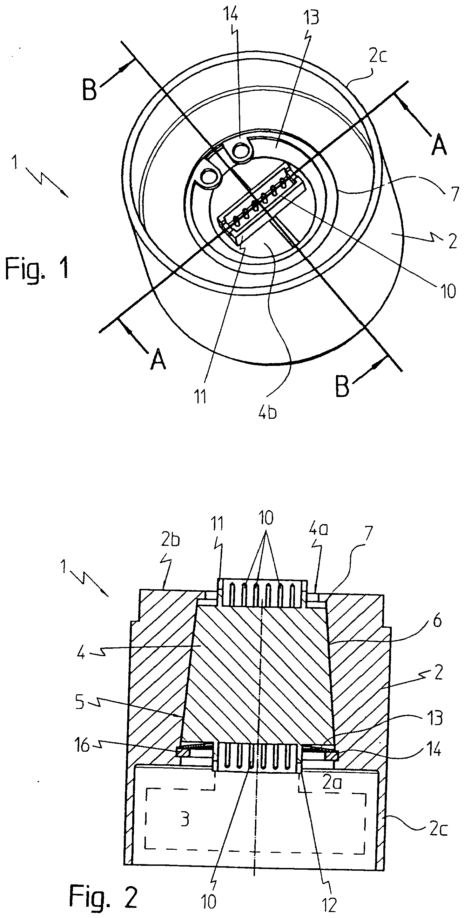

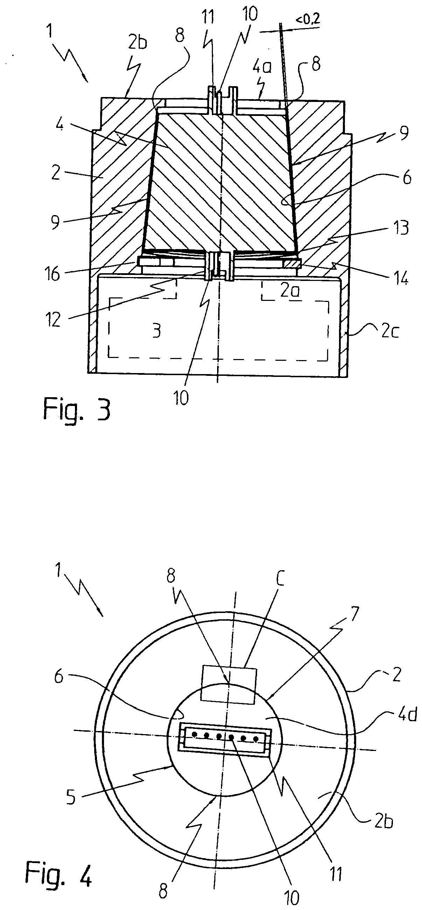

Die Figuren 1 bis 4 zeigen eine Messzelle 1 in unterschiedlichen Darstellungen, wobei der Übersichtlichkeit halber lediglich in den Figuren 2 und 3 ein Druckmessumformer 3 als Sensor angedeutet ist.

Die Messzelle 1 gemäß den Figuren 1 bis 4 besteht aus einem hohlzylindrischen Gehäuse 2 mit einer kegelstumpfförmigen Gehäusebohrung 7, die in Richtung einer stirnseitigen Außenfläche 2b konisch verjüngt ausgebildet ist. An diese Gehäusebohrung 7 schließt sich ein radial nach außen abgesetzten, hohlzylinderförmige Gehäuseinnenraum 2a an, der von einer dünnen ringförmigen Wand 2c gebildet wird und den Druckmessumformer 3 aufnimmt, wie dies die Figuren 2 und 3 zeigen. Dieser Gehäuseinnenraum 2a ist stirnseitig offen, so dass der Druckmessumformer 3 dem zu messenden Druck einer explosionsgefährdeten Atmosphäre ausgesetzt ist.

Ein kegelstumpfförmiges Dichtelement 4 ist mit einer Stirnseite 4a, auf die das Dichtelement 4 konisch verjüngt zuläuft, derart in die Gehäusebohrung 7 eingefügt, dass unter Bildung eines Flächenschlusses zwischen der kegelstumpfförmigen Mantelfläche 5 des Dichtelements 4 und der Innenfläche 6 der Gehäusebohrung 7 diese Stirnseite 4a mit der stirnseitigen Außenfläche 2b des Gehäuses 2 fluchtet.

Um das Dichtelement 4 in seiner Montageposition zu halten, wird nach dem Einführen des Dichtelements 4 in die Gehäusebohrung 7 eine Wellenscheibe 13 als Federelement in die Gehäusebohrung 7 eingeführt, so dass sie an der Stirnfläche 4b des Dichtelements 4 anliegt. In eine am inneren Rand der Gehäusebohrung 7 umlaufende Nut 16 wird ein Sicherungsring 14 eingeclipst, so dass dadurch die Wellenscheibe 13 vorgespannt wird und eine Anpresskraft auf das Dichtelement 4 erzeugt, die es in die Gehäusebohrung 7 drückt, um so eine ausreichende Dichtheit sicherzustellen.

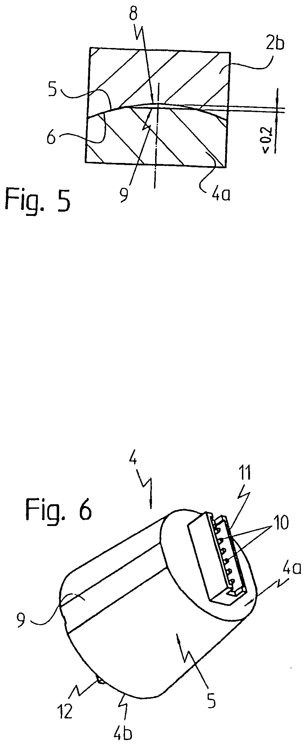

Das Dichtelement 4 weist gemäß Figur 6 auf seiner Mantelfläche 5 diametral gegenüberliegend zwei streifenförmige und ebene Oberflächenabschnitte 9 auf, im Folgenden auch Planfläche genannt, die jeweils in Richtung der Mantellinie der Mantelfläche 5 verlaufen. Ist das Dichtelement 4 in die Gehäusebohrung 7 eingeführt, bildet jede Planfläche 9 zusammen mit der Innenfläche 6 der Gehäusebohrung 7 einen zünddurchschlagsicheren Spalt 8, der vom Gehäuseinnenraum 2a entlang der Gehäusebohrung 7 nach außen führt und gleichzeitig als Druckausgleich für den Druckmessumformer 3 dient. Das Zusammenwirken eines Oberflächenabschnittes 9 mit jeweils der Innenfläche 6 der Gehäusebohrung 7 führt zu einem kreissegmentartigen Querschnitt des Spaltes 8, wie als Detail C der Draufsicht von Figur 4 in Figur 5 dargestellt ist.

Diese beiden Spalte 8 sind insbesondere in der Längsschnittdarstellung des Schnittes B-B gemäß Figur 3 zu erkennen und sind jeweils normgerecht ausgebildet, d. h. weisen bspw. bei einer Höhe des Dichtelements 4 von 17 mm eine Breite von 0,2 mm oder kleiner auf.

Das Dichtelement 4 ist als Kunststoffkörper aus einem Thermoplast, wie bspw. Polyphenylensulfid (PPS) mittels eines Spritzgussverfahrens hergestellt. Gleichzeitig mit der Herstellung dieses Dichtelements 4 werden auch Kontaktstifte 10 mit umspritzt, die in Stiftleisten 11 und 12 zusammengefasst werden.

Die Stiftleiste 12 ragt über die Stirnseite 4b des Dichtelements 4 in das Gehäuseinnenraum 2a der Messzelle 1 und wird dort mit dem Druckmessumformer 3 verbunden. Dessen Messsignale werden über die Kontaktstifte 10 auf die gegenüberliegende Stirnseite 4a in die Stiftleiste 11 geführt, welche an eine Messeinheit (nicht dargestellt) angeschlossen wird, die die Messsignale des Druckmessumformers 3 auswertet.

Das Dichtelement 4 der Messzelle 1 wird als Kunststoffkörper so ausgeführt, dass dessen Mantelfläche 5 höchstens eine Rauigkeit von 3,2 µm aufweist.

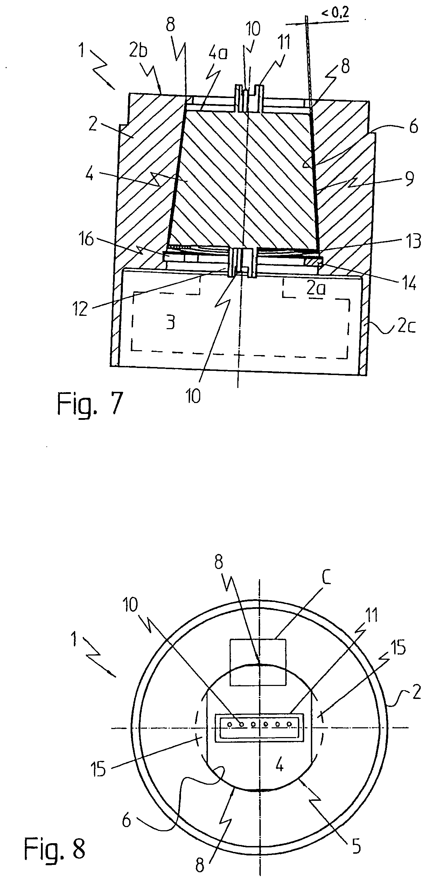

Die Figuren 7 und 8 zeigen eine Messzelle 1 mit einem Gehäuse 2, in dessen Gehäuseinnenraum 2a ebenfalls ein Sensor, bspw. ein Druckmesswandler 3 aufgenommen wird. Anstelle eines kegelstumpfförmigen Dichtelementes ist ein Dichtelement 4 mit einer zylinderförmigen Mantelfläche 5 vorgesehen, wobei in Anpassung an dieses zylinderförmige Dichtelement 4 die Gehäusebohrung 7 als zylindrische Bohrung 7 mit einer zylinderförmigen Innenfläche 6 ausgebildet ist.

Zur Bildung eines Spaltes 8 sind entsprechend des Dichtelements 4 nach Figur 6 auf der Mantelfläche 5 dieses zylinderförmigen Dichtelements 4 diametral gegenüberliegend zwei streifenförmige und ebene Oberflächenabschnitte 9 vorgesehen, die jeweils in Richtung der Mantellinie der Mantelfläche 5 verlaufen. Zusammen mit der Innenfläche 6 der zylindrischen Gehäusebohrung 7 bilden diese Oberflächenabschnitte 9 als Planflächen jeweils einen Spalt 8 mit kreissegmentartigen Querschnitt, entsprechend dem in Figur 5 dargestellten Detail C der Figur 8.

Um ein solches zylinderförmiges Dichtelement 4 in der ebenfalls zylindrischen Gehäusebohrung 7 befestigen zu können, sind gemäß Figur 8 auf der stirnseitigen Außenfläche 2b an der Gehäusebohrung 7 randseitig angeordnete segmentartige Anschläge 15 vorgesehen, so dass beim Einführen dieses Dichtelement 4 vom Gehäuseinnenraum 2a aus in die Gehäusebohrung 7 hieran anschlägt und anliegt. In gleicher Weise wird das Dichtelement 4 in dieser Montageposition von einer Wellenscheibe 13 und von einem in eine Nut 16 eingeclipsten Sicherungsring 14 gehalten.

Das Dichtelement 4 wird ebenso als Kunststoffspritzgussteil aus einem thermoplastischen Kunststoff, wie bspw. Polyphenylensulfid (PPS) hergestellt, wobei dessen Mantelfläche 5 höchstens eine Rauigkeit von 3,2 µm aufweist und gleichzeitig Kontaktstifte 10 mit eingespritzt und entsprechende Stiftleisten 11 und 12 vorgesehen werden.

### Bezugszeichen

- 1: Messzelle
- 2: Gehäuse
- 2a: Gehäuseinnenraum
- 2b: stirnseitige Außenfläche des Gehäuses 2
- 2c: ringförmige Wand des Gehäuses 2
- 3: Sensor, Druckmessumformer
- 4: Dichtelement der Messzelle 1
- 4a: Stirnseite des Dichtelements 4
- 4b: Stirnseite des Dichtelements 4
- 5: Mantelfläche des Dichtelements 4
- 6: Innenfläche der Gehäusebohrung 7
- 7: Gehäusebohrung
- 8: Spalt
- 9: Oberflächenabschnitt auf der Mantelfläche 5

- 10: Kontaktstifte
- 11: Stiftleiste
- 12: Stiftleiste
- 13: Federelement, Wellenscheibe
- 14: Fixierelement, Sicherungsring
- 15: Anschlag
- 16: Nut

## Patentansprüche

1. Messzelle (1) mit einem Gehäuse (2) zur Aufnahme eines Sensors (3), insbesondere eines Druckmessumformers, bei der das Gehäuse (2) eine Druckausgleichsöffnung für den Sensor aufweist,
**dadurch gekennzeichnet, dass**
- ein Dichtelement als kegelstumpfförmiger Kunststoffkörper mit einer Mantelfläche (5) in einer kegelstumpfförmig geformten Gehäusebohrung (7) mit einer Innenfläche (6) angeordnet ist, der Kunststoffkörper wenigstens einen streifenförmigen und ebenen, in Richtung einer Mantellinie der Mantelfläche (5) verlaufenden Oberflächenabschnitt (9) aufweist, der eine Planfläche bildet, und
- die Druckausgleichsöffnung als wenigstens ein zünddurchschlagsicherer Spalt (8) durch Zusammenwirken des Oberflächenabschnittes (9) mit der Innenfläche (6) der Gehäusebohrung (7) gebildet ist.

2. Messzelle nach Anspruch 1,
**dadurch gekennzeichnet, dass**
zur Bildung von zwei Spalten (8) auf der Mantelfläche (5) diametral gegenüberliegend jeweils ein ebener Oberflächenabschnitt (9) vorgesehen ist.

3. Messzelle nach Anspruch 1 oder 2,
**dadurch gekennzeichnet, dass**
eine Spannvorrichtung (13, 14) vorgesehen ist, mit der der Kunststoffkörper in seiner Position gehalten wird.

4. Messzelle nach einem der vorhergehenden Ansprüche,
**dadurch gekennzeichnet, dass**
auf einer Außenseite (2b) des Gehäuses (2) das sich konisch verjüngende Stirnende (4a) des Kunststoffkörper angeordnet ist.

5. Messzelle nach Anspruch 5,
**dadurch gekennzeichnet, dass**
die Spannvorrichtung im Gehäuseinnenraum (2a) des Gehäuses (2) ein Federelement (13), vorzugsweise eine Wellenscheibe zur Erzeugung einer den Kunststoffkörper in die Gehäusebohrung (7) drückende Anpresskraft sowie ein Fixierelement (14), vorzugsweise einen Sicherungsring zur Fixierung des Federelementes (13) umfasst.

6. Messzelle nach einem der vorhergehenden Ansprüche,
**dadurch gekennzeichnet, dass**
der Kunststoffkörper als mediendichte Kontaktdurchführung zur Durchführung von wenigstens einem Kontaktstift (10) ausgebildet ist.

7. Messzelle nach einem der vorhergehenden Ansprüche,
**dadurch gekennzeichnet, dass**
der Kunststoffkörper, vorzugsweise aus einem thermoplastischen Kunststoff, insbesondere aus Polyphenylensulfid (PPS) ausgebildet ist.

8. Messzelle nach Anspruch 7,
**dadurch gekennzeichnet, dass**
der Kunststoffkörper als Spritzgusskunststoffkörper hergestellt ist.

## Claims

1. Measuring cell (1) having a housing (2) for receiving a sensor (3), in particular a pressure transducer, wherein the housing (2) has a pressure compensation opening for the sensor,
**characterised in that**
- a sealing element is arranged in a housing bore (7) formed in the shape of a truncated cone and having an inner surface (6), as a truncated conical plastic body having an outer surface (5), said plastic body having at least one strip-shaped and planar surface section (9) running in the direction of an outer line of the outer surface (5), said surface section forming a plane surface, and
- the pressure compensation opening is formed as at least one flame-proof gap (8) by interaction of the surface section (9) with the inner surface (6) of the housing bore (7).

2. Measuring cell according to claim 1,
**characterised in that**
a respective planar surface section (9) is provided for the formation of two gaps (8) diametrically opposite each other on the outer surface (5).

3. Measuring cell according to claim 1 or 2,
**characterised in that**
a tensioning device (13, 14) is provided, with which the plastic body is held in position.

4. Measuring cell according to one of the preceding claims,
**characterised in that**
the conically tapering end face (4a) of the plastic body is arranged on an outer side (2b) of the housing (2).

5. Measuring cell according to claim 5,
**characterised in that**
the tensioning device in the interior (2a) of the housing (2) comprises a spring element (13), preferably a shaft locating washer, for the generation of contact pressure that presses the plastic body into the housing bore (7), as well as a fixing element (14), preferably a securing ring, for fixing the spring element (13).

6. Measuring cell according to one of the preceding claims,
**characterised in that**
the plastic body is formed as a media-tight contact bushing for guiding through at least one contact pin (10).

7. Measuring cell according to one of the preceding claims,
**characterised in that**
the plastic body is preferably formed from a thermoplastic material, in particular polyphenylene sulphide (PPS).

8. Measuring cell according to claim 7,
**characterised in that**
the plastic body is produced as an injection moulded plastic body.

## Revendications

1. Cellule de mesure (1) comprenant un boîtier (2) destiné à recevoir un capteur (3), en particulier un capteur de pression, dans laquelle le boîtier (2) comporte une ouverture d'équilibrage de la pression pour le capteur,
**caractérisée en ce qu'**
un élément d'étanchéité réalisé sous la forme d'un corps en matériau synthétique en forme de tronc de cône ayant une surface enveloppe (5) est monté dans un perçage (7) du boîtier en forme de tronc de cône, ayant une surface interne (6), le corps en matériau synthétique comportant au moins un segment de surface (9) en forme de bande et plat s'étendant en direction de la ligne enveloppe de la surface enveloppe (5) et formant une surface plane, et
l'ouverture d'équilibrage de la pression est réalisée sous la forme d'une fente anti-transmission de flamme (8) par coopération du segment de surface (9) avec la surface interne (6) du perçage (7) du boîtier.

2. Cellule de mesure conforme à la revendication 1,
**caractérisée en ce que**
pour permettre de former deux fentes (8) il est prévu des segments de surface plans (9) diamétralement opposés sur la surface enveloppe (5).

3. Cellule de mesure conforme à la revendication 1 ou 2,
**caractérisée en ce qu'**
il est prévu un dispositif de serrage (13, 14) permettant de maintenir le corps en matériau synthétique dans sa position.

4. Cellule de mesure conforme à l'une des revendications précédentes,
**caractérisée en ce que**
sur la face externe (2b) du boîtier (2) est installée l'extrémité frontale s'amincissant coniquement (4a) du corps en matériau synthétique.

5. Cellule de mesure conforme à la revendication 5,
**caractérisée en ce que**
le dispositif de serrage comporte, dans le volume interne (2a) du boîtier (2), un élément élastique (13) de préférence une rondelle ondulée permettant de générer une force de compression serrant le corps en matériau synthétique dans le perçage (7) du boîtier ainsi qu'un élément de fixation (14), de préférence un anneau de blocage permettant de fixer l'élément élastique (13).

6. Cellule de mesure conforme à l'une des revendications précédentes,
**caractérisée en ce que**
le corps en matériau synthétique est réalisé sous la forme d'une traversée de contact étanche aux fluides pour permettre le passage d'au moins une tige de contact (10).

7. Cellule de mesure conforme à l'une des revendications précédentes,
**caractérisée en ce que**
le corps en matériau synthétique est de préférence réalisé en un matériau synthétique thermoplastique, en particulier en polyphénylène sulfure (PPS).

8. Cellule de mesure conforme à la revendication 7,
**caractérisée en ce que**
le corps en matériau synthétique est obtenu sous la forme d'un corps en matériau synthétique injecté.
